# EUROPEAN PATENT SPECIFICATION

(11) **EP 2 178 093 B1**
(45) Date of publication and mention of the grant of the patent: **24.11.2010**
(21) Application number: 08166749.5
(22) Date of filing: 16.10.2008
(51) Int. Cl.: G21F 9/20, G21F 9/16, G21F 9/30

(54) **Treatment of liquid wastes containing heavy metals**
Behandlung von flüssigen, schwermetallhaltigen Abfällen
Traitement des déchets liquides contenant des métaux lourds

(43) Date of publication of application: 21.04.2010
(73) Proprietor: Orion Tech Anstalt, 9497 Triesenberg (LI)
(72) Inventor: Biglino, Marco, 16100, Genova (IT)
(74) Representative: Gervasi, Gemma

(56) References cited:
- US-A- 4 514 329
- US-A- 5 494 863
- US-A- 6 153 103

## Description

The present invention is about a process for the treatment of wastes containing heavy metals.

Though "heavy metal" is not an exact definition, it will be used in the present description and in the appended claims to encompass generally all metals comprising, and heavier than, those of the first transition row; besides this definition, as used herein, is meant to encompass said metals be these in elemental form, or in the form of ions, salts or complexes.

Many metals, in particular heavy metals, are known to be hazardous to the ambient. Moreover, when freely present in the ambient, these metals may be incorporated by plants and thereby enter the food chain of animals or humans, thus causing severe problems to their health. To cite but a few, chromium ions (in particular hexavalent chromium ions, Cr (VI)) are known to be carcinogenic; lead ions can damage nervous connections and cause blood and brain disorders; mercury has been recognized to be responsible of tremors, impaired cognitive skills, and sleep disturbance; and heavier metals may be radioactive, leading to a number of diseases generally due to modifications of the genetic code or interference with the cell division processes caused by strongly ionizing radiations given off by these metals.

In many industrial processes or civil applications the use of these metals is however necessary. For instance, chromium is used in the production of stainless steels, in chrome plating, in tanning leather or for the production of dyes and paints; lead is used in lead-acid batteries and in the production of ceramic glazes or lead-glasses; mercury is widely used in fluorescent lamps; and radioactive metals are necessary for the operation of nuclear power plants for the production of electrical energy. The industrial processes or civil applications producing wastes will be referred to in the following description and in the appended claims as waste producing activities.

Most of the cited activities produce wastes in the form of ashes, slurries, muds or solutions or dispersions containing metallic ions, that have to be disposed of in a safe way. Long-term storage in pools, open areas or tanks is not easy, as it requires wide areas or volumes, in particular in the case of diluted solutions, such as those resulting from washing process steps. For a description of these problems, given with particular reference to the problem of disposing of wastes from nuclear plants, reference can be made to the article "Nuclear Fuel Recycling: More Trouble Than It's Worth", Frank N. von Hippel, Scientific American, April 2008.

It is thus an object of the present invention to provide a process for the treatment of wastes containing heavy metals, that makes it possible to fix such metals in solid articles of long-term stability, not giving rise to spontaneous release of said metals.

This and other objects are reached by the present invention with a sol-gel process comprising the steps of:
- obtaining a solution or dispersion containing at least a heavy metal;
- forming a sol by adding to said solution or dispersion silica powders in an amount such that the content of silica in the sol is comprised between 10% and 90% by weight, controlling that the pH of the sol is not higher than 4;
- adding to said sol at least one alkoxysilane in such an amount to obtain a silica:alkoxysilane molar ratio higher than 6;
- raising the pH of the sol to a value above 4;
- pouring the sol into a mould;
- allowing said sol to gel, thus obtaining a hydrogel;
- drying the hydrogel, thus obtaining a dried gel; and
- sintering the dried gel, thus obtaining a vitreous silica product
**characterized in that** said solution or dispersion containing at least a heavy metal is a waste coming from a waste producing activity.

The sol-gel technique is well known, and a number of variations and specific embodiments of sol-gel processes have been described in the prior art. Also well known are sol-gel processes for producing mixed-oxide glasses or ceramics, generally based on a silica matrix containing ions of other metals, mainly for use in the mechanical, optical or electro-optical fields. However, known sol-gel processes are generally addressed to the production of glass or ceramic compositions intended for specific uses, thus requiring specific and well controlled chimico-physical characteristics of the resulting products (e.g., good transparency in well defined regions of the spectrum for optical applications); this, in turn, imposes well defined constraints to the process parameters, with particular reference to the exact formulation of the starting solutions or sols; the solutions of metals different from silicon, for use in prior art processes, need thus to be prepared and used according to well designed recipes.

To the contrary, it is not the object of the present invention to obtain a product of defined characteristics, apart from the capability to retain heavy metals; thus, the properties of the final product in the case of the present invention are not important, as long as said product is in the form of a solid body or pieces, capable of retaining heavy metals and showing heavy metals leaching at its surface that is as low as possible and preferably null.

The first step of the process of the invention consists in obtaining a solution or dispersion containing at least a heavy metal. "Obtaining", as used herein with reference to the solution or dispersion of heavy metals, may mean receiving a liquid waste exactly as this comes from a given liquid-waste producing activity (e.g., a solution containing traces of uranium and plutonium as a by-product of the energy-production processes carried out in nuclear power plants). Alternatively, "obtaining" may involve a certain degree of preparation or pretreatment of the actual waste as it results from said activity. This may be the case when the liquid waste is in the form of ashes, slurries or muds, that may need to be wetted or diluted before use in the process of the invention; or, to the contrary, in the case of a too diluted liquid waste, "obtaining" may imply an operation of pre-concentration before use in the process of the invention, in order to reduce the volumes of liquids involved and thus the dimensions of the equipments.

In case of a liquid waste, in principle its solvent my be any. It may be water, an organic solvent such as alcohols or ketones, or a mixture of water and other solvents. When the solvent is not just water, the risk associated with the specific solvent when subjected to the next steps of the process must be assessed prior to using the waste; for instance, ethers could be dangerous if subjected to heating in the presence of air. The knowledge and capabilities required by such prior evaluations are the normal background of chemical engineers, considering that safety data for practically any solvent in a broad range of conditions of temperatures or pressures, or their compatibility with other chemicals, are available in the chemical literature. Water is the most common solvent used in activities producing liquid wastes; it is also the preferred one to be added to wastes in the form of ashes, slurries or muds; as a consequence, the following description will be made with reference to water-based solutions or dispersions, but the invention is of general applicability also to solutions or dispersions based on different solvents.

The second step of the process is the formation of a sol by addition of silica powders to said solution or dispersion. The silica may be any form of silica powders having particle size lower than 100 µm; preferably, said silica powders have particle size below 10 µm, and even more preferably below 5 µm. The preferred type of silica is pyrogenic silica, that is, a highly dispersed form of silica obtained by combustion of SiCl₄ with oxygen; pyrogenic silica is sold e.g. by Degussa AG with the name Aerosil^{®} EG 50. Silica is added to the starting solution or dispersion in an amount such that its content in the resulting sol is comprised between 10% and 90% by weight; preferably, such content is between 30% and 65% b.w., and even more preferably between 50% and 60% b.w. The addition of silica to the starting solution or dispersion is generally carried out under mechanical stirring, for example with a mixer of Ultra-Turrax^{®} type or similar devices.

During the addition of silica to form said sol, the pH of the system must be controlled to make sure that it does not exceed 4. Preferably, at this stage the pH is in the range from 1.5 to 3, more preferably from 2 to 2.5. The necessary acidity can be imparted to the system already by the characteristics of the starting waste; for instance, liquid wastes coming from nuclear plants have typically pH values around 1.5. Otherwise, the acidity of the sol can be controlled by adding an acid, in particular an inorganic acid, for example hydrochloric acid, phosphoric acid, sulfuric acid or the like, or an organic acid, for example acetic acid.

To the sol is then added at least one alkoxysilane in such an amount to obtain a silica:alkoxysilane molar ratio higher than 6. If said ratio is below 6, the hydrogel obtained later on during the process may be not mechanically strong enough to withstand drying without breaking into small pieces; this would be undesirable in view of the required properties of heavy metals retention, as explained in greater detail below. Said ratio is preferably lower than 30, as greater values involve a high consumption of silica without giving rise to practical advantages.

Preferably, said alkoxysilane is a tetraalkoxysilane in which each alkoxy group has from 1 to 6, preferably from 1 to 4, carbon atoms. More preferably, the tetraalkoxysilane is chosen from: tetraethoxysilane (TEOS), tetramethoxysilane (TMOS), methoxytriethoxysilane (MTEOS). Preferred for the specific application is tetraethoxysilane (TEOS). According to a preferred embodiment, the alkoxysilane is added in an amount such that the molar ratio of water to alkoxysilane is between 40 and 200, preferably between 50 and 160, more preferably between 60 and 120. The addition of the alkoxysilane is preferably carried out under (or followed by) agitation, in order to improve homogeneity of the dispersion.

After adding the alkoxysilane, the temperature of the sol is preferably increased to a value between 30 and 50 °C for a time variable between 6 and 18 hours. The sol pH is then raised to a value generally between 4 and 6, preferably between 4.7 and 5.2. This change of pH can be achieved, for example, by adding a water-soluble inorganic or organic basic compound, for example ammonium hydroxide or an amine, in particular cyclohexylamine.

Alternatively, an aminoalkyl-alkoxysilane can be used as the basic compound. Examples of suitable compounds are: 3-aminopropyl-trimethoxysilane, 3-aminopropyl-triethoxysilane, 2-aminoethyl-3-aminopropyl-dimethoxysilane, 2-aminoethyl-3-aminopropyl-diethoxysilane, [3-(2-aminoethyl)aminopropyl]-trimethoxysilane, [3-(2-aminoethyl)aminopropyl]-triethoxysilane, or their mixtures. The basic compound is preferably added under stirring so as to prevent excessive local pH increase which can cause premature gelling of parts of the sol with consequent non-homogeneity in the final product.

The sol is then poured into a container and allowed to gel to hence obtain a hydrogel. In view of the object of the invention, that is to block heavy metals in a vitreous matrix, the shape of the container is not important; the preferred shape is however the parallelepiped, leading to brick-like products as a result of the process, that are the most convenient objects to be transported and stored. The container can be made of various materials, for example plastic materials, metals, glass fibre, carbon fibre, ceramic, etc., as long as its characteristics are such that the final gel does not adhere to it. Preferably the mould comprises plastic materials such as polypropylene, polyethylene, polystyrene, fluorinated polymers (such as polytetrafluoroethylene, PTFE) or silicones. Gelling is preferably but not necessarily carried out at room temperature.

Gelling is the most important step of the process of the invention; it is the step that allows the heavy metals to be incorporated or anyway blocked into a silica matrix, and thereupon into the final vitreous product. There are two possible mechanisms of incorporation into said matrix, depending on the chemical nature of the specific metal.

The first mechanism is of chemical type, is operative with metals whose valence number is at least 3, and preferably 4 or 5, and leads to the result that the metal becomes part of the matrix; it can be represented by the following reaction:

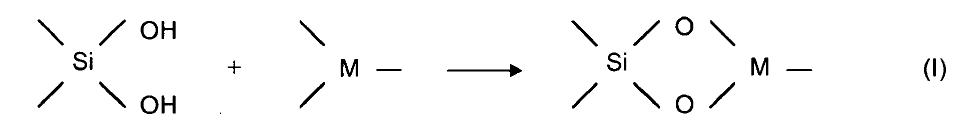

The reaction is represented above in an extremely schematic way, intended only to show the formation of "oxygen bridges" linking the metal (M, exemplified here as a trivalent element) to the tridimensional network of bonds making up silica; it does not account for atoms or groups saturating the valence of the reactant silicon or metal-containing compounds (on the left side of the reaction); nor it gives indication of further products of the reaction.

The second mechanism is of physical type, and is operative with metals of valence 1 or 2 and that may form stable molecules with oxygen. It is well known in the sol-gel art that elements of valence 1 or 2 are not suitable being incorporated into silica matrices via oxygen bridges; the reason is that elements of valence 1 or 2 can only link to one or two oxygen atoms, respectively, leading at most to chain-like structures; this arrangement is not stable enough thermodynamically, so that these metal-oxygen bonds can be broken and the metals cleaved by the solvent present in the pores of the silica gel. The inventors have however found that some metal atoms forming stable molecules throughout the process may be framed in cages formed by the silica network. This mechanism may be represented schematically by the following reaction, in which it is exemplified the situation of four silicon atoms bridged by oxygen atoms framing an uranium compound, uranyl nitrate (UO₂(NO₃)₂), typically found in the liquid waste of process of recycling spent nuclear fuel:

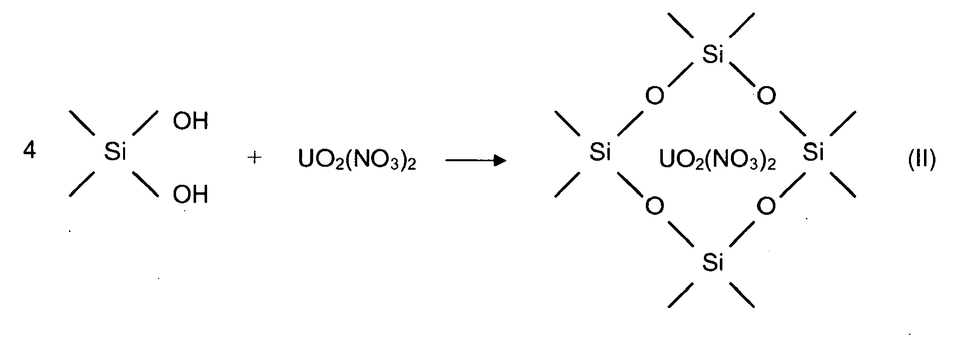

When the metal to be fixed through the process is particularly dangerous, such as thallium, chromium (VI) ions, or a radioactive metal, the hydrogel may be subjected to an additional step of surface washing with a suitable solvent, carried out for instance by immersion in the solvent. The solvent must be capable of extracting the metal from the hydrogel; it may be e.g. water, an aqueous solution of an inorganic acid, such as hydrochloric or nitric acid, or a solution of a complexant of the metal. The hydrogel is left in contact with the solvent for a limited time, so as to effect metals removal only from the outmost part of the gel; the technique of selective removal of metals from a surface layer of a gel is known in the sol-gel art, being employed in the production of optical parts with a gradient of refractive index, as described for instance in patent application JP 05-009036 and in patent US 5,182,236. The subsequent drying and sintering of a gel obtained with this additional step results in a vitreous body having an outer shell of silica surrounding a part where the heavy metals are confined; such bodies show essentially no release of heavy metals under any conditions. The used solvent, containing the metal extracted from the hydrogel, may be recycled by adding it to the starting solution or dispersion in a new run of the process.

When gelling is complete, the hydrogel is dried to remove as much as possible the water present inside the gelled structure. With the process features adopted, and in particular the amount of silica and the high silica:alkoxysilane molar ratio, the hydrogel may be dried without breaking by simple treatments in an oven, with no need to having recourse to long and costly treatments such as supercritical drying (generally preceded by solvent exchange in the pores of the gel) of many processes of the prior art. Drying of the gel is preferably carried out by introducing the hydrogel into a thermal and humidity cycle oven. In this manner both the temperature and the degree of humidity under which drying takes place can be controlled to prevent formation of internal stresses within the vitreous material due to non-uniformities in the drying process. The drying time can vary within wide limits, depending on the various process parameters involved, in particular the volume and/or outer surface of the vitreous body to be produced. Typically, drying lasts for a minimum of a few hours to 1200 hours, preferably between 600 and 900 hours. The temperature at which the drying step is conducted is preferably varied during the process, in general between 15 °C and 120 °C, preferably between 20 °C and 100 °C. The degree of humidity is also preferably varied during the drying process, in general between 30% and 100%. Preferably, the degree of humidity is maintained, during at least the first half of the overall drying time, at values on an average greater than 70%, and then gradually reduced to average values between 60% and 30%. Powders that may form during the hydrogel drying in oven may be recycled by adding them to the starting solution or dispersion in a new run of the process.

With regard to the process of sintering the dried gel, this is carried out under different conditions compared to those of most sol-gel processes of the prior art. In fact, in known processes sintering generally comprise a first phase of calcining in an atmosphere containing oxygen (pure oxygen, air, oxygen-nitrogen blends or the like), carried out at temperatures generally in the range between about 300 and 600 °C; a second phase of complete dehydration and purification in the presence of at least one chlorinated compound such as CCl₄ generally run at temperatures in the range between about 600 and 800 °C; and a final phase of consolidation in an inert atmosphere, obtained by raising the temperature at values of at least 1200 °C and up to about 1400 °C.

The second phase of the sintering step of most prior art processes, conducted in the presence of chlorinated compounds, is intended to remove traces of metal atoms from the matrix (commonly silica), by transforming these into volatile chlorides that are removed by the stream of gas through the still open pores of the gel; the reason for this treatment is that these metals are generally seen as impurities that can change the final properties, in particular optical ones, of the final article. To the contrary, the retention of heavy metal atoms in the final product is the very object the present invention, so the operation of treating with chlorinated compounds is to be absolutely avoided.

The first phase of the sintering step of most prior art processes, calcination, is not strictly necessary in the process of the invention. This operation is needed in traditional sol-gel processes in order to burn off the organic molecules and moieties present in the dried gel, such as remainders of alcohols used in the process or generated by the hydrolysis of alkoxysilanes; if left in the gel, these species could impair the properties of the final product, for instance by producing carbonaceous species during the last phase of sintering at high temperature under inert atmosphere or by forming bubbles in the final vitreous article. However, the presence of carbonaceous species (imparting black coloration to the article) or bubbles is not detrimental for the purposes of present invention. As a consequence, if through a trial test on the actual waste to be treated it is determined that skipping the calcination phase does not impair the heavy metals retention properties of the final vitreous body, this phase can be avoided. A calcination phase is preferably adopted in the process of the present invention when the heavy metal is physically encased in the silica matrix (see reaction (II) above), in order to avoid possible evaporation of the heavy metal molecule, by transforming it into the corresponding oxide, that is generally nonvolatile. For uranyl compounds, such as uranyl nitrate or uranyl phosphate, UO₂HPO₄, the reactions can be schematically (i.e., not balanced for the exact stoichiometry) represented as follows:

UO₂(NO₃)₂ + O₂ → UO₂ (or UO₃) + NO₂ (III)

UO₂HPO₄ + O₂ → UO₂ (or UO₃) + P₂O₅ + H₂O (IV)

The last phase of the sintering step, heating between 1200 and 1400 °C under inert atmosphere, is necessary in order to obtain a vitreous body, with no open porosity left and thus capable of retaining at its inside the heavy metals. This phase can be carried out under nitrogen or any other non reactive gas.

The product of the sintering step is a vitreous body containing the heavy metal, that can be disposed of e.g. in warehouses or by burying it.

An advantage of the bodies obtained according to the process of the invention is that, thanks to their density and thus compactness, and to their regular shape (e.g., parallelepiped), they can be easily stacked, either free or in containers, in more limited volumes than wastes of the prior art; this allows a saving of space in disposal sites and, in case the waste needs to be protected (e.g. by walls resisting to nuclear radiations), a saving of material required for the confinement.

Thanks again to their compactness and regular shape, said bodies may also be further protected, one-by-one or in small groups, by placing them in suitable encasings made of a material capable to retain dangerous species, be these heavy metals or radiations; the encasing material may be, e.g., a metal having the necessary properties of resistance to the species to be confined, for instance lead in case the retaining of nuclear radiations is needed. The encasing may be formed around said bodies starting from a sheet of the protecting material that is cut to shape and bent around the body; or by casting a molten metal, and allowing it to solidify, around one or a group of said bodies. These "protected" bodies may, in their turn, be transported or disposed of, either as such or further enclosed in containers, more easily then other forms of dangerous wastes, which require containers of special characteristics and construction (e.g., hermetic containers, not required in the present case).

Preferably however, if the heavy metal is a valuable one and the economics of the process justify it, the product of the sintering step is re-used for production of the heavy metal, similarly to a ore of the same.

In this case some of the steps of the process are adapted in view of the recycling destination of the final vitreous body.

In particular, the starting solution of dispersion containing the heavy metal is concentrated as much as possible, in order to obtain a high weight content of the metal in the final body; this can be done by extracting the solvent by heating and/or by subjecting the starting solution or dispersion to reduced pressure, or simply by leaving it exposed to the atmosphere for a long enough period.

Another modification of the general process of the invention in view of recycling of the metals is in the sintering step. In this case, at least one phase of the sintering step is carried out while maintaining in the treatment chamber a controlled partial pressure of oxygen, such as to transform the heavy metal into an oxide having melting or sublimation points higher than the melting point of silica. In this way, it is possible to submit the final product of the sintering process to melting, recovering the oxide of the interesting metal in solid form. As an example, it has been found that treating a dry gel containing UO₂(NO₃)₂ at a temperature of about 800 °C under a gas blend of 33% by volume oxygen and 66% by volume helium with a flow comprised between about 1,5 and 3 litres/minute (after having produced a partial vacuum in the treating chamber of between 0.7-0.8 bar to improve penetration of the gas blend into the pores of the gel), UO₂ is obtained; this oxide has a sublimation temperature of 2,878 °C, namely, about 1,000 °C higher than the melting temperature of silica; this difference of melting points gives room for easy recycling of the vitreous bodies obtained through the process of the invention.

The present invention is further illustrated hereinafter by some embodiments provided as non-limiting examples of the extent of the invention.

### EXAMPLES

It is prepared a series of six aqueous solutions containing the elements Co, Ni, Sb, Cs, Er and Cr. Each solution is prepared by dissolving 100 g of a soluble salt of the relevant metal in 100 cc of water, to which nitric acid is added to maintain the pH at a value of about 2 in order to avoid the possible precipitation of oxo-hydroxo compounds of the metal. The used salt and the resulting concentration of the solution in mol/l are reported in Table 1 below. Each solution is then added with 500 g of Aerosil^{®} EG 50 under agitation with Ultra-Turrax^{®}. To each of the thus obtained sols is added under stirring TEOS in such an amount that the molar ratio silica:TEOS is equal to 10. The sols are heated to 50 °C, and ammonium hydroxide is added dropwise and under agitation to each of the sols to raise the pH at a value of 6 (the pH is monitored during the addition of NH₄OH). The thus obtained sols are poured into PTFE beakers and allowed to gel overnight. The resulting hydrogels are extracted from the beakers and dried in a controlled-atmosphere oven, by raising the temperature from room temperature to 100 °C during 8 hours and maintaining the final temperature for 400 hours, under an atmosphere of air with 70% relative humidity during the first 208 hours (comprising the heating phase), that is then gradually reduced to 30% during the subsequent 200 hours; the dried gels are then kept under atmospheric air into the oven while this is allowed to cool down to room temperature.

The dried gels are then placed into a kiln, the temperature is raised to 600 °C under pure oxygen, then the flowing gas is switched to nitrogen and the temperature is brought to 1400 °C. The kiln is left to cool down and six vitreous bodies are obtained. The leaching of heavy metals of the six samples is measured according to the procedure of the standard ASTM C1285-02; this procedure has been designed specifically for evaluating suitability of a vitreous system to retain radioactive elements, and thus for use in the nuclear field, but its applicability is general. The measures are carried out by placing the sample in a PTFE beaker, adding a solution of nitric acid in water at concentration of 10% by weight, heating the system to 90 °C, recovering a sample of nitric acid and measuring its heavy metal content by atomic absorption; according to said standard, the results are given as grams of metal leached in the acid per square meter of the sample. The results of these tests are given in Table 1 below.

**Table 1**

| Metal | Salt | Solution conc. (mol/l) | Amount of leached metal (g/m²) |
|---|---|---|---|
| Co | Cobalt (II) nitrate Hexahydrate Co(NO₃)₂ x 6H₂O | 0,34 | 0.00006 |
| Ni | Nickel(II) nitrate Hexahydrate Ni(NO₃)₂ x 6H₂O | 0,34 | 0.0008 |
| Sb | Antimony(III) choride SbCl₃ | 0,44 | 0.0005 |
| Cs | Cesium nitrate CsNO₃ | 0,52 | 0.0005 |
| Er | Erbium(III)nitrate pentahydrate Er(NO₃)₂ x 5H₂O | 0,23 | 0.00005 |
| Cr | Chromium(III)Chloride CrCl₃ | 0,63 | 0.00002 |

Standard ASTM C1285-02 indicates that a vitreous body is suitable for use in disposal of radioactive (heavy) metals when the leached metal is below 0,001 g/m². As can be seen from the data in the table, the process of the invention allows reaching the required low values of leaching imposed by this standard.

## Claims

1. Sol-gel process for the treatment of wastes containing heavy metals, comprising the steps of:
- obtaining a solution or dispersion containing at least a heavy metal;
- forming a sol by adding to said solution or dispersion silica powders having particle size below 100 µm in an amount such that the content of silica in the sol is comprised between 10% and 90% by weight, controlling that the pH of the sol is not higher than 4;
- adding to said sol at least one alkoxysilane in such ah amount to obtain a silica:alkoxysilane molar ratio higher than 6;
- raising the pH of the sol to a value above 4;
- pouring the sol into a mould;
- allowing said sol to gel, thus obtaining a hydrogel;
- drying the hydrogel, thus obtaining a dried gel; and
- sintering the dried gel, thus obtaining a vitreous silica product **characterized in that** said solution or dispersion containing at least a heavy metal is a waste coming from a waste producing activity.

2. Sol-gel process according to claim 1 wherein said step of obtaining a solution or dispersion consists in receiving a liquid waste exactly as this comes from a given liquid-waste producing activity.

3. Sol-gel process according to claim 1 wherein, when the liquid waste is in the form of ashes, slurries or muds, said step of obtaining a solution or dispersion consists in wetting or diluting the said waste.

4. Sol-gel process according to claim 1 wherein, when the liquid waste is a diluted liquid waste, said step of obtaining a solution or dispersion consists in pre-concentrating said waste.

5. Sol-gel process according to claim 1 wherein said silica powders have particle size below 10 µm.

6. Sol-gel process according to claim 5 wherein said powders have particle size below 5 µm.

7. Sol-gel process according to claim 1 wherein said silica is pyrogenic silica.

8. Sol-gel process according to claim 1 wherein said content of silica in the sol is comprised between 30% and 65% by weight.

9. Sol-gel process according to claim 8 wherein said content of silica in the sol is comprised between 50% and 60% by weight.

10. Sol-gel process according to claim 1 wherein during the addition of silica the pH is from 1.5 to 3.

11. Sol-gel process according to claim 1 wherein said silica:alkoxysilane molar ratio is lower than 30.

12. Sol-gel process according to claim 1 wherein said alkoxysilane is a tetraalkoxysilane in which each alkoxy group has from 1 to 6, preferably from 1 to 4, carbon atoms.

13. Sol-gel process according to claim 12 wherein said tetraalkoxysilane is chosen from tetraethoxysilane, tetramethoxysilane and methoxytriethoxysilane.

14. Sol-gel process according to claim 1 wherein the alkoxysilane is added in an amount such that the molar ratio of water to alkoxysilane is between 40 and 200.

15. Sol-gel process according to claim 14 wherein said water to alkoxysilane molar ratio is between 50 and 160.

16. Sol-gel process according to claim 15 wherein said ratio is between 60 and 120.

17. Sol-gel process according to claim 1 wherein in said step of pH raising the pH is raised in the range between 4.7 and 5.2.

18. Sol-gel process according to claim 1 wherein said raising of pH is achieved by adding a water-soluble inorganic or organic basic compound.

19. Sol-gel process according to claim 18 wherein said basic compound is ammonium hydroxide or an amine, in particular cyclohexylamine.

20. Sol-gel process according to claim 18 wherein said basic compound is an aminoalkyl-alkoxysilane.

21. Sol-gel process according to claim 20 wherein said aminoalkyl-alkoxysilane is chosen among 3-aminopropyl-trimethoxysilane, 3-aminopropyltriethoxysilane, 2-aminoethyl-3-aminopropyl-dimethoxysilane, 2-aminoethyl-3-aminopropyl-diethoxysilane, [3-(2-aminoethyl)aminopropyl]-trimethoxysilane, [3-(2-aminoethyl)aminopropyl]-triethoxysilane, or their mixtures.

22. Sol-gel process according to claim 1 wherein said hydrogel, before drying, is subjected to an additional step of extraction of heavy metals from its outermost part, by washing it for a limited time with a solvent chosen among water, an aqueous solution of an inorganic acid, or a solution of a complexant of the metal.

23. Sol-gel process according to claim 22 wherein the solvent containing the metal extracted from the hydrogel is recycled by adding it to the starting solution or dispersion in a new run of the process.

24. Sol-gel process according to claim 1 wherein said drying step is carried out in a thermal and humidity cycle oven, varying the temperature during the process between 15 °C and 120 °C, and varying the degree of humidity between 30% and 100%.

25. Sol-gel process according to claim 1 wherein powders possibly formed during hydrogel drying in oven are recycled by adding them to the starting solution or dispersion in a new run of the process.

26. Sol-gel process according to claim 1 wherein said sintering step is carried out by heating the dried gel between 1200 and 1400 °C.

27. Sol-gel process according to claim 1 wherein said sintering step is preceded by an additional step of calcination of the dried gel.

28. Sol-gel process for the treatment of wastes containing heavy metals, comprising the steps of:
- obtaining a solution or dispersion containing at least a heavy metal by concentrating as much as possible the starting solution;
- forming a sol by adding to said solution or dispersion silica powders having particle size below 100 µm in an amount such that the content of silica in the sol is comprised between 10% and 90% by weight, controlling that the pH of the sol is not higher than 4;
- adding to said sol at least one alkoxysilane in such an amount to obtain a silica:alkoxysilane molar ratio higher than 6;
- raising the pH of the sol to a value above 4;
- pouring the sol into a mould;
- allowing said sol to gel, thus obtaining a hydrogel;
- drying the hydrogel, thus obtaining a dried gel; and
- sintering the dried gel while maintaining in the treatment chamber a controlled partial pressure of oxygen, such as to transform the heavy metal into an oxide having melting or sublimation points higher than the melting point of silica.

29. Vitreous body obtained according to the process of claim 1.

30. Vitreous body obtained according to the process of claim 28.

31. Use of the vitreous body of claim 29 or 30 as a source of at least a heavy metal.

## Patentansprüche

1. Sol-Gel-Verfahren für die Behandlung von Schwermetalle enthaltenden Abfällen, umfassend die Schritte:
- Erhalten einer Lösung oder Dispersion, die wenigstens ein Schwermetall enthält;
- Bilden eines Sols durch Zusetzen von Silciumoxid-Pulvern zu der Lösung oder Dispersion, die eine Teilchengröße von unter 100 µm aufweisen, in einer solchen Menge, dass der Gehalt an Siliciumoxid in dem Sol zwischen 10 Gew.-% und 90 Gew.-% liegt, wobei man kontrolliert, dass der pH-Wert des Sols nicht höher ist als 4;
- Zusetzen wenigstens eines Alkoxysilans zu dem Sol in einer solchen Menge, dass man ein Mol-Verhältnis Siliciumoxid:Alkoxysilan von höher als 6 erhält;
- Anheben des pH-Wertes des Sols auf einen Wert über 4;
- Gießen des Sols in eine Form;
- Ermöglichen, dass das Sol geliert und man so ein Hydro-Gel erhält;
- Trocknen des Hydro-Gels, wodurch man ein getrocknetes Gel erhält; und
- Sintern des getrockneten Gels, wodurch man ein glasartiges Siliciumoxid-Produkt erhält
**dadurch gekennzeichnet, dass** die Lösung oder Dispersion, die wenigstens ein Schwermetall enthält, ein Abfall ist, der aus einer Abfallproduzierenden Aktivität kommt.

2. Sol-Gel-Verfahren nach Anspruch 1, worin der Schritt des Erhaltens einer Lösung oder Dispersion darin besteht, dass man einen flüssigen Abfall exakt in der Form erhält, wie sie von einer gegebenen, flüssigen Abfall produzierenden Aktivität kommt.

3. Sol-Gel-Verfahren nach Anspruch 1, worin dann, wenn der flüssige Abfall in Form von Aschen, Aufschlämmungen oder Schlämmen vorliegt, der Schritt des Erhaltens einer Lösung oder Dispersion darin besteht, den Schlamm zu befeuchten oder zu verdünnen.

4. Sol-Gel-Verfahren nach Anspruch 1, worin dann, wenn der flüssige Abfall ein verdünnter flüssiger Abfall ist, der Schritt des Erhaltens einer Lösung oder Dispersion darin besteht, den Abfall vorzukonzentrieren.

5. Sol-Gel-Verfahren nach Anspruch 1, worin die Siliciumoxid-Pulver eine Teilchengröße unter 10 µm aufweisen.

6. Sol-Gel-Verfahren nach Anspruch 5, worin die Pulver eine Teilchengröße unter 5 µm aufweisen.

7. Sol-Gel-Verfahren nach Anspruch 1, worin das Siliciumoxid pyrogenes Siliciumoxid ist.

8. Sol-Gel-Verfahren nach Anspruch 1, worin der Gehalt an Siliciumoxid in dem Sol zwischen 30 Gew.-% und 65 Gew.-% liegt.

9. Sol-Gel-Verfahren nach Anspruch 8, worin der Gehalt an Siliciumoxid in dem Sol zwischen 50 Gew.-% und 60 Gew.-% liegt.

10. Sol-Gel-Verfahren nach Anspruch 1, worin während der Zugabe von Siliciumoxid der pH-Wert im Bereich von 1,5 bis 3 liegt.

11. Sol-Gel-Verfahren nach Anspruch 1, worin das Mol-Verhältnis Siliciumoxid:Alkoxysilan unter 30 liegt.

12. Sol-Gel-Verfahren nach Anspruch 1, worin das Alkoxysilan ein Tetraalkoxysilan ist, in dem jede Alkoxy-Gruppe 1 bis 6 Kohlenstoffatome aufweist, vorzugsweise 1 bis 4 Kohlenstoffatome.

13. Sol-Gel-Verfahren nach Anspruch 12, worin das Tetraalkoxysilan gewählt ist aus Tetraethoxysilan, Tetramethoxysilan und Methoxytriethoxysilan.

14. Sol-Gel-Verfahren nach Anspruch 1, worin das Alkoxysilan in einer solchen Menge zugesetzt wird, dass das Mol-Verhältnis von Wasser zu Alkoxysilan zwischen 40 und 200 liegt.

15. Sol-Gel-Verfahren nach Anspruch 14, worin das Mol-Verhältnis Wasser zu Alkoxysilan zwischen 50 und 160 liegt.

16. Sol-Gel-Verfahren nach Anspruch 15, worin das Verhältnis zwischen 60 und 120 liegt.

17. Sol-Gel-Verfahren nach Anspruch 1, worin in dem Schritt des Anhebens des pH-Wertes der pH-Wert in dem Bereich zwischen 4,7 und 5,2 angehoben wird.

18. Sol-Gel-Verfahren nach Anspruch 1, worin das Anheben des pH-Wertes erreicht wird durch Zusetzen einer wasserlöslichen anorganischen oder organischen basischen Verbindung.

19. Sol-Gel-Verfahren nach Anspruch 18, worin die basische Verbindung Ammoniumhydroxid oder ein Amin ist, insbesondere Cyclohexylamin.

20. Sol-Gel-Verfahren nach Anspruch 18, worin die basische Verbindung ein Aminoalkylalkoxysilan ist.

21. Sol-Gel-Verfahren nach Anspruch 20, worin das Aminoalkylalkoxysilan gewählt ist unter 3-Aminopropyltrimethoxysilan, 3-Aminopropyltriethoxysilan, 2-Aminoethyl-3-aminopropyl-dimethoxysilan, 2-Aminoethyl-3-aminopropyl-diethoxysilan [3-(2-Aminoethyl-)aminopropyl-]trimethoxysilan, [3(2-Aminoethyl-)aminopropyl-]triethoxysilan oder deren Mischungen.

22. Sol-Gel-Verfahren nach Anspruch 1, worin das Hydro-Gel vor dem Trocknen einen zusätzlichen Schritt einer Extraktion von Schwermetallen aus seinem äußersten Teil unterworfen wird, indem man es für eine begrenzte Zeit mit einem Lösungsmittel wäscht, das gewählt ist unter Wasser, einer wässrigen Lösung einer anorganischen Säure oder einer Lösung eines komplexierenden Mittels des Metalls.

23. Sol-Gel-Verfahren nach Anspruch 22, worin das Lösungsmittel, das das Metall enthält, das aus dem Hydro-Gel extrahiert wurde, in Kreislauf geführt bzw. recyclisiert wird, indem man es der Ausgangs-Lösung oder -Dispersion in einem neuen Durchlauf des Verfahrens zusetzt.

24. Sol-Gel-Verfahren nach Anspruch 1, worin der Trocknungsschritt durchgeführt wird in einem Ofen mit einem Thermo- und Feuchtigkeitszyklus, wobei man die Temperatur während des Prozesses zwischen 15 °C und 120 °C variiert und den Feuchtigkeitsgrad zwischen 30 % und 100 % variiert.

25. Sol-Gel-Verfahren nach Anspruch 1, worin Pulver, die möglicherweise während des Trocknens des Hydro-Gels im Ofen gebildet werden, in Kreislauf geführt bzw. recyclisiert werden, indem man sie der Ausgangs-Lösung oder -Dispersion in einem neuen Durchlauf des Verfahrens zusetzt.

26. Sol-Gel-Verfahren nach Anspruch 1, worin der Sinter-Schritt durchgeführt wird, indem man das getrocknete Gel auf eine Temperatur zwischen 1.200 und 1.400 °C erhitzt.

27. Sol-Gel-Verfahren nach Anspruch 1, worin dem Sinter-Schritt vorangeht ein zusätzlicher Schritt des Calcinierens des getrockneten Gels.

28. Sol-Gel-Verfahren für die Behandlung von Schwermetalle enthaltenden Abfällen, umfassend die Schritte:
- Erhalten einer Lösung oder Dispersion, die wenigstens ein Schwermetall enthält, durch weitest mögliches Konzentrieren der Ausgangs-Lösung;
- Bilden eines Sols durch Zusetzen von Siliciumoxid-Pulvern zu der Lösung oder Dispersion, die eine Teilchengröße unter 100 µm aufweisen, in einer solchen Menge, dass der Gehalt an Siliciumoxid in dem Sol zwischen 10 Gew.-% und 90 Gew.-% liegt, wobei man kontrolliert, dass der pH-Wert des Sols nicht höher ist als 4;
- Zusetzen wenigstens eines Alkoxysilans zu dem Sol in einer solchen Menge, dass man ein Molverhältnis Siliciumoxid:Alkoxysilan höher als 6 erhält;
- Anheben des pH-Wertes des Sols auf einen Wert oberhalb von 4;
- Gießen des Sols in eine Form;
- Ermöglichen, dass das Sol geliert und man so ein Hydro-Gel erhält;
- Trocknen des Hydro-Gels, wodurch man ein getrocknetes Gel erhält; und
- Sintern des getrockneten Gels, während man in der Behandlungskammer einen gesteuerten Partialdruck von Sauerstoff aufrechterhält, um so das Schwermetall in ein Oxid zu überführen, das Schmelz- oder Sublimationspunkte aufweist, die höher sind als der Schmelzpunkt von Siliciumoxid.

29. Glaskörper erhalten durch das Verfahren gemäß Anspruch 1.

30. Glaskörper erhalten durch das Verfahren gemäß Anspruch 28.

31. Verwendung des Glaskörpers nach Anspruch 29 oder 30 als Quelle von wenigstens einem Schwermetall.

## Revendications

1. Procédé sol-gel pour le traitement des déchets contenant des métaux lourds, comprenant les étapes consistant en :
- l'obtention d'une solution ou d'une dispersion contenant au moins un métal lourd ;
- la formation d'un sol en ajoutant à ladite solution ou dispersion des poudres de silice possédant une taille de particules inférieure à 100 µm en une quantité telle que la teneur en silice dans le sol est comprise dans la plage allant de 10 % à 90 % en poids, en contrôlant le pH du sol pour qu'il ne soit pas supérieur à 4 ;
- l'ajout audit sol d'au moins un alcoxysilane en une quantité telle qu'elle permet d'obtenir un rapport molaire de silice/alcoxysilane supérieur à 6 ;
- l'augmentation du pH du sol à une valeur supérieure à 4 ;
- le coulage du sol dans un moule ;
- la permission dudit sol de geler, obtenant ainsi un hydrogel ;
- le séchage de l'hydrogel, obtenant ainsi un gel sec ;
et
- la sintérisation du gel sec, obtenant ainsi un produit de silice vitreuse
**caractérisé en ce que** ladite solution ou dispersion contenant au moins un métal lourd est un déchet provenant d'une activité de production de déchets.

2. Procédé sol-gel selon la revendication 1, dans lequel ladite étape d'obtention d'une solution ou d'une dispersion consiste à recevoir un déchet liquide exactement tel que provenant d'une activité de production de déchets liquides donnée.

3. Procédé sol-gel selon la revendication 1, dans lequel le déchet liquide est sous la forme de cendres, suspensions ou boues, ladite étape d'obtention d'une solution ou d'une dispersion consiste à mouiller ou diluer ledit déchet.

4. Procédé sol-gel selon la revendication 1, dans lequel le déchet liquide est un déchet liquide dilué, ladite étape d'obtention d'une solution ou d'une dispersion consiste à pré-concentrer ledit déchet.

5. Procédé sol-gel selon la revendication 1, dans lequel lesdites poudres de silice possèdent une taille de particules inférieure à 10 µm.

6. Procédé sol-gel selon la revendication 5, dans lequel lesdites poudres possèdent une taille de particules inférieure à 5 µm.

7. Procédé sol-gel selon la revendication 1, dans lequel ladite silice est de la silice pyrogène.

8. Procédé sol-gel selon la revendication 1, dans lequel ladite teneur en silice dans le sol est comprise dans la plage allant de 30 % à 65 % en poids.

9. Procédé sol-gel selon la revendication 8, dans lequel ladite teneur en silice dans le sol est comprise dans la plage allant de 50 % à 60 % en poids.

10. Procédé sol-gel selon la revendication 1, dans lequel pendant l'ajout de la silice, le pH est compris dans la plage allant de 1,5 à 3.

11. Procédé sol-gel selon la revendication 1, dans lequel ledit rapport molaire de silice/alcoxysilane est inférieur à 30.

12. Procédé sol-gel selon la revendication 1, dans lequel ledit alcoxysilane est un tétraalcoxysilane dans lequel chaque groupe alcoxy possède de 1 à 6, de préférence de 1 à 4, atomes de carbone.

13. Procédé sol-gel selon la revendication 12, dans lequel ledit tétraalcoxysilane est choisi parmi le tétraéthoxysilane, le tétraméthoxysilane et le méthoxytriéthoxysilane.

14. Procédé sol-gel selon la revendication 1, dans lequel l'alcoxysilane est ajouté en une quantité telle que le rapport molaire de l'eau à l'alcoxysilane est compris dans la plage allant de 40 à 200.

15. Procédé sol-gel selon la revendication 14, dans lequel ledit rapport molaire de l'eau à l'alcoxysilane est compris dans la plage allant de 50 à 160.

16. Procédé sol-gel selon la revendication 15, dans lequel ledit rapport est compris dans la plage allant de 60 à 120.

17. Procédé sol-gel selon la revendication 1, dans lequel dans ladite étape d'augmentation du pH, le pH est augmenté dans la plage allant de 4,7 à 5,2.

18. Procédé sol-gel selon la revendication 1, dans lequel ladite augmentation de pH est obtenue par l'ajout d'un composé basique inorganique ou organique soluble dans l'eau.

19. Procédé sol-gel selon la revendication 18, dans lequel ledit composé basique est l'hydroxyde d'ammonium ou une amine, en particulier la cyclohexylamine.

20. Procédé sol-gel selon la revendication 18, dans lequel ledit composé basique est un aminoalkylalcoxysilane.

21. Procédé sol-gel selon la revendication 20, dans lequel ledit aminoalkylalcoxysilane est choisi parmi le 3-aminopropyltriméthoxysilane, le 3-aminopropyltriéthoxysilane, le 2-aminoéthyl-3-aminopropyldiméthoxysilane, le 2-aminoéthyl-3-aminopropyldiéthoxysilane, le [3-(2-aminoéthyl)aminopropyl]-triméthoxysilane, le [3-(2-aminoéthyl)aminopropyl]-triéthoxysilane ou leurs mélanges.

22. Procédé sol-gel selon la revendication 1, dans lequel ledit hydrogel, avant le séchage, est soumis à une étape supplémentaire d'extraction des métaux lourds de sa partie la plus externe, par son lavage pendant une période déterminée avec un solvant choisi parmi l'eau, une solution aqueuse d'un acide inorganique ou une solution d'un agent de complexion du métal.

23. Procédé sol-gel selon la revendication 22, dans lequel le solvant contenant le métal extrait de l'hydrogel est recyclé en l'ajoutant à la solution ou la dispersion de départ dans une nouvelle exécution du procédé.

24. Procédé sol-gel selon la revendication 1, dans lequel ladite étape de séchage est réalisée dans un four à cycles de chauffage et d'humidité, en faisant varier la température pendant le procédé entre 15 °C et 120 °C, et en faisant varier le degré d'humidité entre 30 % et 100 %.

25. Procédé sol-gel selon la revendication 1, dans lequel les poudres éventuellement formées pendant le séchage de l'hydrogel dans le four sont recyclées en les ajoutant à la solution ou la dispersion de départ dans une nouvelle exécution du procédé.

26. Procédé sol-gel selon la revendication 1, dans lequel ladite étape de sintérisation est réalisée en chauffant le gel sec entre 1200 °C et 1400 °C.

27. Procédé sol-gel selon la revendication 1, dans lequel ladite étape de sintérisation est précédée par une étape supplémentaire de calcination du gel sec.

28. Procédé sol-gel pour le traitement des déchets contenant des métaux lourds, comprenant les étapes consistant en :
- l'obtention d'une solution ou d'une dispersion contenant au moins un métal lourd en concentrant autant que possible la solution de départ ;
- la formation d'un sol en ajoutant à ladite solution ou dispersion des poudres de silice possédant une taille de particules inférieure à 100 µm en une quantité telle que la teneur en silice dans le sol est comprise dans la plage allant de 10 % à 90 % en poids, en contrôlant le pH du sol pour qu'il ne soit pas supérieur à 4 ;
- l'ajout audit sol d'au moins un alcoxysilane en une quantité telle qu'elle permet d'obtenir un rapport molaire de silice/alcoxysilane supérieur à 6 ;
- l'augmentation du pH du sol à une valeur supérieure à 4 ;
- le coulage du sol dans un moule ;
- la permission dudit sol de geler, obtenant ainsi un hydrogel ;
- le séchage de l'hydrogel, obtenant ainsi un gel sec ; et
- la sintérisation du gel sec, tout en maintenant dans la chambre de traitement une pression partielle d'oxygène contrôlée, de sorte à transformer le métal lourd en un oxyde possédant des points de fusion ou de sublimation supérieurs au point de fusion de la silice.

29. Corps vitreux obtenu selon le procédé de la revendication 1.

30. Corps vitreux obtenu selon le procédé de la revendication 28.

31. Utilisation du corps vitreux selon la revendication 29 ou 30, en tant que source d'au moins un métal lourd.
